# EUROPÄISCHE PATENTSCHRIFT

(11) **EP 4 173 766 B1**
(45) Veröffentlichungstag und Bekanntmachung des Hinweises auf die Patenterteilung: **10.07.2024**
(21) Anmeldenummer: 21205352.4
(22) Anmeldetag: 28.10.2021
(51) Int. Cl.: B25J 9/16, G05B 19/4061

(54) **VORRICHTUNG UND VERFAHREN ZUM PROGRAMMIEREN UND/ODER BETREIBEN EINER BEWEGLICHEN MASCHINE, INSBESONDERE EINES ROBOTERS**
METHOD AND DEVICE FOR PROGRAMMING AND/OR OPERATING A MOBILE MACHINE, IN PARTICULAR A ROBOT
DISPOSITIF ET PROCÉDÉ POUR LA PROGRAMMATION ET/OU L'OPÉRATION D'UNE MACHINE MOBILE, EN PARTICULIER D'UN ROBOT

(43) Veröffentlichungstag der Anmeldung: 03.05.2023
(73) Patentinhaber: SICK AG, 79183 Waldkirch (DE)
(72) Erfinder: Ramachandra, Sanketh, Freiburg (DE); Hansen, Christoph, Hamburg (DE); Plitzkow, Jan, 79183 Ahensburg (DE); Winter, Jonas, Nusse (DE)

(56) Entgegenhaltungen:
- EP-A1- 2 113 344
- EP-A1- 3 189 947

## Beschreibung

Die Erfindung betrifft eine Vorrichtung und ein Verfahren zum Programmieren und/oder Betreiben einer beweglichen Maschine, insbesondere eines Roboters.

Es sind eine Vielzahl Anwendungen von gefahrbringenden beweglichen Maschinen (z.B. Robotern oder fahrerlosen Transportfahrzeugen (FTF, englisch Automated Guided Vehicle, AGV) bekannt, bei denen sich Mensch und Maschine einen gemeinsamen Arbeitsraum teilen. Zur Minimierung von Unfall- oder Verletzungsrisiken werden ganzheitliche Methoden der Risikominimierung mit baulichen, technischen, und/oder organisatorischen Maßnahmen über die Betrachtung der Gesamtanwendung verwendet.

Ein relevanter Anteil von Unfällen mit gefahrbringenden Maschinen kann jedoch bereits während der Installations-, der Konfigurations- und der Einlernphase des Systems auftreten. Um derartige Unfälle zu verhindern, werden in der Regel alle Aufgaben zur Installation und Konfiguration und Einlernen von Bewegungsabläufen des Systems durch speziell geschultes Personal durchgeführt. Um weiterhin zu verhindern, dass ungeschultes Personal Konfigurationseinstellungen oder Bewegungsabläufe verändert oder gar selbst Installations-, Konfigurations- oder Einlernaufgaben ausführt, erfolgt in der Regel ein Passwortschutz der entsprechenden Programmteile einer Steuereinheit des Systems.

Aus der EP2378445A1 ist ein Simulationsverfahren zur sicherheitstechnischen Planung einer industriellen Anlage mit Gefährdungspotential bekannt, wobei Schutzfelder/Funktionen an eine Roboteranwendung angepasst werden. Dazu müssen zum einen die Roboteranwendungen a priori bekannt sein, zum anderen muss die Planung durch entsprechend geschulte Steuerungstechniker erfolgen.

Die EP3189947A1 beschreibt ein Verfahren zum Konfigurieren und zum Betreiben einer überwachten automatisierten Arbeitszelle, wobei die Arbeitszelle zumindest eine gefahrbringende Maschine und zumindest eine Überwachungseinrichtung aufweist. Maschinenraumdaten, die einen Arbeitsraum der Maschine definieren werden an eine Konfigurationsvorrichtung für die Überwachungseinrichtung übermittelt und Schutzraumdaten anhand der Maschinenraumdaten erstellt, so dass die Schutzraumdaten einen Schutzraum der Überwachungseinrichtung definieren, der dem Arbeitsraum der Maschine vollständig oder teilweise dem Arbeitsraum entspricht oder größer als der Arbeitsraum ist. Die Schutzraumdaten werden an die Überwachungseinrichtung übertragen, so dass die Überwachungseinrichtung den Schutzraum überwacht. Auch hier handelt es sich um eine Konfiguration einer Roboteranwendung, zu der entsprechend geschultes Personal benötigt wird.

Häufige Änderungen in Produktionsabläufen, beispielsweise bedingt durch geringe Losgrößen oder kundenspezifische Anforderungen erfordern jedoch eine sichere, unkomplizierte und flexible Anpassung von Bewegungsabläufen beweglicher Maschinen insbesondere im Produktionsumfeld. Nachteilig ist hierbei, dass, wie oben beschrieben, stets auf besonders geschultes Personal zurückgegriffen werden muss, wodurch die Produktionskosten erhöht werden oder es zu Verzögerungen im Produktionsablauf kommt, da entsprechend geschultes Personal beispielsweise aufgrund von Fachkräftemangel häufig nicht in ausreichender Zahl zur Verfügung steht.

Es ist daher Aufgabe der Erfindung, eine Vorrichtung zum Programmieren und/oder Betreiben einer beweglichen Maschine, beispielsweise eines Roboters zur Verfügung zu stellen, um mögliche Gefahren insbesondere während eines Einlernvorgangs der Maschine zu eliminieren oder zumindest signifikant zu reduzieren.

Diese Aufgabe wird durch eine Vorrichtung und ein Verfahren zum Programmieren und/oder Betreiben einer beweglichen Maschine, insbesondere eines Roboters nach den Ansprüchen 1 beziehungsweise 5 und ein entsprechendes Computerprogramm nach Anspruch 9 gelöst.

Die Erfindung geht von dem Grundgedanken aus, in einem eine Vielzahl von Bewegungsabschnitten aufweisenden Bewegungsablauf einer beweglichen Maschine einen nicht sicheren Bewegungsabschnitt zu identifizieren. Dazu ist eine erfindungsgemäße Vorrichtung zunächst dazu eingerichtet, Konfigurationsdaten der beweglichen Maschine und Konfigurationsdaten wenigstens eines Sicherheitssensors zu empfangen.

Bei den Konfigurationsdaten der beweglichen Maschine kann es sich beispielsweise um deren Abmessungen, Bewegungsachsen, Bewegungsgeschwindigkeiten, Parameter des Reaktions- und Bremsverhaltens. Die Konfigurationsdaten der Maschine umfassen Dimensionen der Arbeitsbereiche der Maschine, wobei die Arbeitsbereiche alle Raumpunkte umfassen können, die während des Betriebs der beweglichen Maschine durch diese erreicht werden können. Die Konfigurationsdaten der beweglichen Maschine können auch Information über eine Umgebung der Maschine, beispielsweise Positionen und Geometrien von statischen Objekten im Umfeld der Maschine wie Wände oder Förderanlagen, umfassen.

Handelt es sich bei der Maschine beispielsweise um einen Roboter, der dazu eingerichtet ist, Bauteile an einem Ort aufzunehmen und an einem anderen Ort abzulegen, so können Konfigurationsdaten auch die Abmessungen beziehungsweise Dimensionen des Arbeitsbereichs des Roboters mit aufgenommenem Bauteil umfassen. Bei Robotern, bei denen an einem Roboterflansch unterschiedliche Werkzeuge montiert sein können, können die Konfigurationsdaten entsprechend die Abmessungen beziehungsweise die Dimensionen des Arbeitsbereichs des Roboters mit dem jeweils montierten Werkzeug umfassen. Abmessungen der Maschine beziehungsweise der Bauteile können beispielsweise in Form von CAD-Daten vorliegen.

Die Konfigurationsdaten des wenigstens einen Sicherheitssensors umfassen Dimensionen eines Überwachungsbereichs des Sicherheitssensors, also die räumlichen Dimensionen des Bereichs, in dem der Sicherheitssensor Objekte erfassen kann. In der Regel werden zur Überwachung eines Arbeitsbereichs einer beweglichen Maschine eine Vielzahl von Sicherheitssensoren mit überlappenden Überwachungsbereichen eingesetzt. Sicherheitssensoren können auch an der beweglichen Maschine selbst angeordnet sein, wobei sich deren Überwachungsbereiche bei einer Bewegung der Maschine ändern können. Derartige bewegungsabhängige Dimensionen von Überwachungsbereichen können ebenfalls Bestandteil der Konfigurationsdaten des Sicherheitssensors sein.

Die erfindungsgemäße Vorrichtung ist weiterhin dazu eingerichtet, einen geplanten Bewegungsablauf der beweglichen Maschine zu empfangen, wobei der Bewegungsablauf eine Vielzahl von Bewegungsabschnitten aufweist. Ein Bewegungsabschnitt kann beispielsweise eine Strecke zwischen zwei Wegpunkten sein, entlang denen sich die Maschine beziehungsweise ein Teil von ihr, wie beispielsweise ein Roboterarm oder ein am Roboterarm befindlicher Greifer, bewegt. Der Bewegungsablauf kann durch Bedienelemente auf einem Terminal einer Steuereinheit der beweglichen Maschine programmiert werden, mittels Handführung der Maschine oder eines Teils der Maschine durch einen Bediener erfolgen, oder durch Kombination von Programmierung und Handführung erstellt werden. Alternativ kann auch ein bereits erstellter Bewegungsablauf in einen Speicher der Steuereinheit der Maschine geladen werden.

Erfindungsgemäß ist die Vorrichtung dazu eingerichtet, unter Verwendung der Konfigurationsdaten der Maschine und der Konfigurationsdaten des wenigstens einen Sicherheitssensors wenigstens einen nicht sicheren Bewegungsabschnitt zu identifizieren. Als nicht sicherer Bewegungsabschnitt ist ein Bewegungsabschnitt der beweglichen Maschine zu verstehen bei dem ein vorgegebenes Sicherheitskriterium verletzt wird. Die erfindungsgemäße Vorrichtung ist also dazu eingerichtet, für die Bewegungsabschnitte des Bewegungsablaufs zu prüfen, ob diese einem oder mehreren vorgegebenen Sicherheitskriterien entsprechen.

Ein Sicherheitskriterium ist, dass sich die bewegliche Maschine beziehungsweise ein Teil von ihr nicht aus dem Überwachungsbereich der Sicherheitssensoren bewegt.

Ein weiteres Sicherheitskriterium kann sein, dass eine Bewegungsgeschwindigkeit der Maschine oder eines Teils der Maschine eine vorgegebene Bewegungsgeschwindigkeit nicht überschreitet. Auch Mindestabstände zu Objekten in der Umgebung der Maschine können ein Sicherheitskriterium darstellen, wobei diese Mindestabstände auch von einer Bewegungsgeschwindigkeit der Maschine oder eines Teils der Maschine abhängig sein können.

Die Erfindung hat den Vorteil, dass mögliche Gefahren durch eine bewegliche Maschine oder einen Teil der Maschine bereits während eines Einlernvorgangs eines Bewegungsablaufs der Maschine erkannt und dadurch eliminiert oder zumindest signifikant reduziert werden können. Insbesondere muss für die Planung des Bewegungsablaufs nicht auf sicherheitstechnisch speziell geschultes Personal zurückgegriffen werden, da eine Überprüfung des Bewegungsablaufs der Maschine auf nicht sichere Bewegungsabschnitte durch die erfindungsgemäße Vorrichtung selbst erfolgt.

Eine Aufteilung des geplanten Bewegungsablaufs in eine Vielzahl von Bewegungsabschnitte kann bereits bei der Programmierung des Bewegungsablaufs erfolgen. Der geplante Bewegungsablauf weist dann entsprechende Informationen auf, wobei die Vorrichtung dazu eingerichtet sein kann, diese Information bei der Überprüfung des Bewegungsablaufes zu verwenden. Alternativ kann die Vorrichtung dazu ausgebildet sein, den geplanten Bewegungsablauf gemäß vorgegebenen Kriterien in eine Vielzahl von Bewegungsabschnitte aufzuteilen. Beispielsweise kann eine Aufteilung nach zurückgelegter Strecke eines definierten Punktes der Maschine oder nach Dauer der Bewegung erfolgen.

Die erfindungsgemäße Vorrichtung kann bevorzugt eine Schnittstelle zum Ausgeben eines identifizierten nicht sicheren Bewegungsabschnitts aufweisen. Der nicht sichere Bewegungsabschnitt kann dem Bediener von einem mit der Schnittstelle verbundenen Ausgabegerät angezeigt werden, beispielsweise auf einem Terminal einer Steuereinheit der beweglichen Maschine oder durch Leuchthinweise an einem oder mehreren Sicherheitssensoren oder an der beweglichen Maschine selbst.

Dadurch wird dem Bediener die Erkennung nicht sicherer Bewegungsabschnitte erleichtert.

Die erfindungsgemäße Vorrichtung kann bevorzugt Teil einer Steuereinheit einer beweglichen Maschine sein, wobei die Vorrichtung und/oder die Steuereinheit dazu eingerichtet ist, bei Ausführung des Bewegungsablaufs durch die Maschine den Bewegungsablauf bei Erreichen eines nicht sicheren Bewegungsabschnitts zu verlangsamen oder zu stoppen. Dadurch kann eine Einlernphase einer beweglichen Maschine zusätzlich abgesichert werden. Diese Ausführungsform kann besonders vorteilhaft bei einer handgeführten Planung des Bewegungsablaufs zur Anwendung kommen, da der Bediener unmittelbar an der Maschine den nicht sicheren Bewegungsabschnitt erkennen kann und durch Nachführen der Maschine einen Bewegungsablauf definieren kann, der den vorgegebenen Sicherheitskriterien entspricht.

Die Vorrichtung kann derart ausgebildet sein, dass eine Eingabe und/oder Änderung beziehungsweise der Empfang von Konfigurationsdaten der beweglichen Maschine und/oder Konfigurationsdaten des wenigstens einen Sicherheitssensors erst nach einer erfolgreichen Authentifizierung möglich ist. Eine Authentifizierung kann beispielsweise durch eine Passwortabfrage erfolgen. Alternativ können Konfigurationsdaten der beweglichen Maschine und/oder Konfigurationsdaten des wenigstens einen Sicherheitssensors, die von einer Steuereinheit empfangen werden einen Authentifizierungsschlüssel aufweisen, wobei die Vorrichtung dazu eingerichtet ist eine Gültigkeit der Konfigurationsdaten anhand des Authentifizierungsschlüssels zu prüfen. Dadurch kann gewährleistet werden, dass die Konfigurationsdaten der beweglichen Maschine und/oder die Konfigurationsdaten des wenigstens einen Sicherheitssensors beispielsweise nur von sicherheitstechnisch speziell geschultem Personal eingegeben und/oder geändert beziehungsweise nur gültige Konfigurationsdaten empfangen werden können.

In einer Ausführungsform der Erfindung kann die Vorrichtung eine mehrere Speicherabschnitte umfassende Speichereinheit aufweisen. Der Bewegungsablauf kann dabei in einem ersten Speicherabschnitt gespeichert sein und die Konfigurationsdaten der beweglichen Maschine und/oder die Konfigurationsdaten des wenigstens einen Sicherheitssensors in einem von dem ersten Speicherabschnitt verschiedenen, zweiten Speicherabschnitt. Der zweite Speicherabschnitt kann bevorzugt eine stärkere Zugangsbeschränkung aufwiesen als der erste Speicherabschnitt. Damit kann eine Manipulation der Konfigurationsdaten der Maschine und/oder der Konfigurationsdaten des wenigstens einen Sicherheitssensors weiter erschwert oder verhindert werden.

Besonders vorteilhaft kann die erfindungsgemäße Vorrichtung mit einer sensorischen Absicherung eines Arbeitsbereiches eines an einem Roboterflansch montierten Werkzeugs verwendet werden. Hier kann es bereits bei der Einlernphase eines Bewegungsablaufs zu Quetschgefahren am Roboter beziehungsweise am Roboter-Werkzeug kommen.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Das erfindungsgemäße Verfahren kann als Computerprogramm mit Programmcodemitteln zum Durchführen des Verfahrens realisiert werden. Das Computerprogramm kann auf einem Speichermedium gespeichert sein.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Darstellung einer beispielhaften Anwendung einer erfindungsgemäßen Vorrichtung
- Fig. 2: eine schematische Darstellung einer weiteren beispielhaften Anwendung einer erfindungsgemäßen Vorrichtung
- Fig.3: ein beispielhaftes Ablaufdiagramm eines erfindungsgemäßen Verfahrens zum Programmieren und/oder Betreiben einer beweglichen Maschine

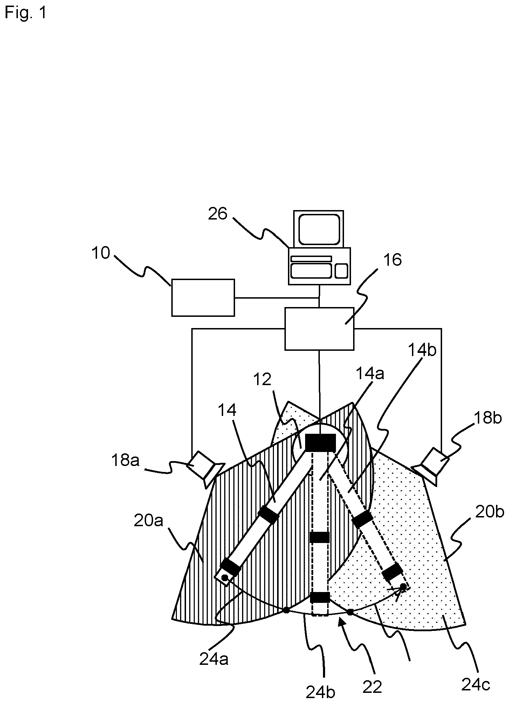

Figur 1 zeigt in einer schematischen Aufsicht eine beispielhafte Anwendung einer erfindungsgemäßen Vorrichtung 10. Ein Roboter 12 mit einem Roboterarm 14 und einer Steuereinheit 16 wird von einem ersten Sicherheitssensor 18a und einem zweiten Sicherheitssensor 18b, die jeweils einen ersten Überwachungsbereich 20a und einen zweiten Überwachungsbereich 20b aufweisen, überwacht. Ein geplanter Bewegungsablauf 22 des Roboterarms 14 ist durch gestrichelte Positionen 14a, 14b des Roboterarms 14 dargestellt, wobei sich der Roboterarm 14 durch eine Drehung des Roboters 12 entgegen des Uhrzeigersinnes von links nach rechts bewegt. Der Bewegungsablauf 22 ist dabei in drei Bewegungsabschnitte 24a, 24b, 24c aufgeteilt. Die Vorrichtung 10 ist dazu eingerichtet, Dimensionen und einen Arbeitsbereich des Roboters 12 und des Roboterarms 14, Dimensionen der Überwachungsbereiche 20a, 20b der Sicherheitssensoren 18a, 18b, wenigstens ein vorgegebenes Sicherheitskriterium und den geplanten Bewegungsablauf 22 des Roboters 12 beziehungsweise des Roboterarmes 14 zu empfangen und auf Basis der empfangenen Informationen einen Bewegungsabschnitt 24b zu identifizieren, der das vorgegebene Sicherheitskriterium verletzt. Im vorliegenden Beispiel bewegt sich der Roboterarm 14 in einem Bewegungsabschnitt 24b außerhalb der Überwachungsbereiche 20a, 20b, der Sicherheitssensoren 18a, 18b, womit ein potenzielles Sicherheitsrisiko vorliegt. Der entsprechende Bewegungsabschnitt 24b würde also ein Sicherheitskriterium, welches fordert, dass sich der Roboterarm 14 nur innerhalb der Überwachungsbereiche 20a, 20b, der Sicherheitssensoren 18a, 18b bewegt, verletzen. Die Vorrichtung 10 kann die Information über den nicht sicheren Bewegungsabschnitt 24b über eine Schnittstelle an ein Terminal 26 der Steuereinheit 16 des Roboters übermitteln. Die Vorrichtung 10 ist rein beispielhaft als separates Modul dargestellt. Insbesondere können auch die Steuereinheit 16 oder das Terminal 26 die Vorrichtung 10 umfassen.

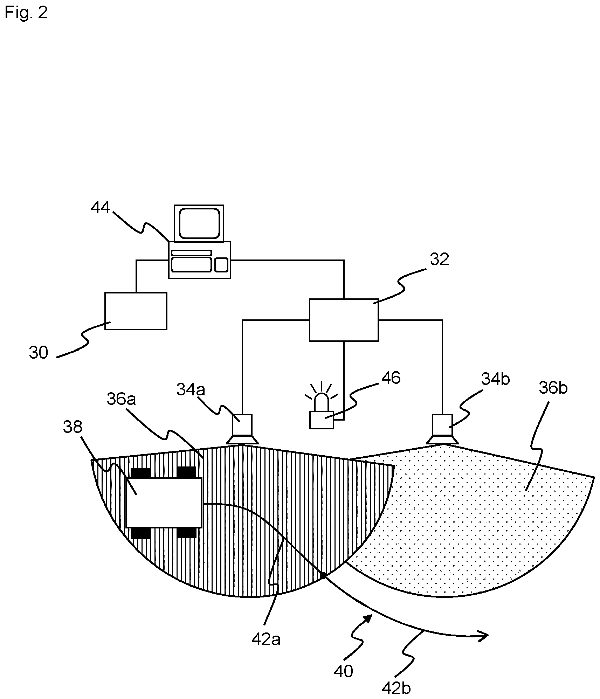

Figur 2 zeigt in einer schematischen Aufsicht eine weitere beispielhafte Anwendung einer erfindungsgemäßen Vorrichtung 30. Eine Sicherheitssteuerung 32 ist einem ersten Sicherheitssensor 34a und einem zweiten Sicherheitssensor 34b, die jeweils einen ersten Überwachungsbereich 36a und einen zweiten Überwachungsbereich 36b aufweisen, verbunden. Die Sicherheitssensoren 34a, 34b überwachen ein führerloses Transportsystem (FTS) 38. Die Vorrichtung 30 ist dazu eingerichtet, Abmessungen und einen geplanten Bewegungsablauf 40 des führerlosen Transportsystems 38, sowie die Dimension der Überwachungsbereiche 36a, 36b der Sicherheitssensoren 34a, 34b zu empfangen und aus den empfangenen Daten aus den Bewegungsabschnitten 42a, 42b des Bewegungsablaufs 40 Bewegungsabschnitte zu identifizieren, die ein vorgegebenes Sicherheitskriterium verletzen. Im vorliegenden Beispiel liegt ein Bewegungsabschnitt 42b außerhalb der Überwachungsbereiche 36a, 36b der Sicherheitssensoren, würde also ein Sicherheitskriterium, welches fordert, dass sich das führerlose Transportsystem 38 nur innerhalb der Überwachungsbereiche 36a, 36b der Sicherheitssensoren 34a, 34b bewegen darf, verletzen. Die Vorrichtung 30 kann die Information über den nicht sicheren Bewegungsabschnitt 24b über eine Schnittstelle an ein Terminal 44 der Sicherheitssteuerung 32 übermitteln. Alternativ oder zusätzlich kann die Information über den nicht sicheren Bewegungsabschnitt 24b über ein Leuchtzeichen, beispielsweise eine Signalleuchte 46 erfolgen. Die Vorrichtung 30 ist rein beispielhaft als separates Modul dargestellt. Insbesondere können auch die Steuereinheit 32 oder das Terminal 44 die Vorrichtung 30 umfassen.

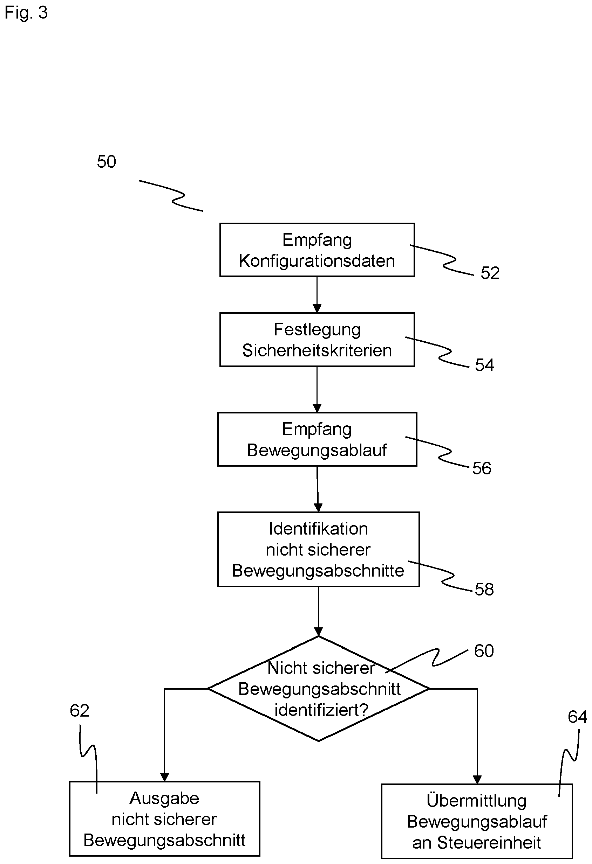

Figur 3 zeigt ein beispielhaftes Ablaufdiagramm 50 eines erfindungsgemäßen Verfahrens zum Programmieren und/oder Betreiben einer beweglichen Maschine. In einem ersten Schritt 52 werden die während eines Installations- und/oder Konfigurationsvorgangs von sicherheitstechnisch speziell geschultem Personal festgelegten Konfigurationsdaten der beweglichen Maschine sowie Konfigurationsdaten wenigstens eines Sicherheitssensors empfangen, beispielsweise durch direkte Eingabe der Konfigurationsdaten oder Auslesen der Konfigurationsdaten aus einem Speicher einer Steuereinheit einer beweglichen Maschine und/oder aus einer Sicherheitssteuerung.

Im zweiten Schritt 54 erfolgt, ebenfalls durch sicherheitstechnisch speziell geschultes Personal, eine Festlegung von Sicherheitskriterien für den Betrieb der beweglichen Maschine, beispielsweise die Festlegung, dass kein Teil der beweglichen Maschine einen Überwachungsbereich des wenigstens einen Sicherheitssensors verlassen darf, dass die bewegliche Maschine oder ein Teil von ihr eine vorgegebene Geschwindigkeit und/oder Beschleunigung nicht überschreiten darf, oder dass die bewegliche Maschine oder ein Teil von ihr vorgegebene Mindestabstände zu Objekten in der Umgebung einhalten muss, beispielsweise um eine Quetschgefahr zu minimieren.

Im folgenden, dritten Schritt 56 wird ein geplanter Bewegungsablauf der beweglichen Maschine empfangen, wobei der Bewegungsablauf eine Vielzahl von Bewegungsabschnitten umfasst. Der Bewegungsablauf kann sowohl durch direkte Eingabe der Bewegungsabschnitte erzeugt sein, aber auch durch Handführung der Maschine, beispielsweise durch Handführung eines Roboterarms. Der geplante Bewegungsablauf kann vom Bedienpersonal programmiert oder eingelernt werden, sicherheitstechnisch speziell geschultes Personal ist für diesen Schritt nicht notwendig.

Im vierten Schritt 58 erfolgt die Identifikation von Bewegungsabschnitten, die einen oder mehrere der vorgegebenen Sicherheitskriterien verletzen, beispielsweise durch eine Prüfung, ob sich die bewegliche Maschine in einem Überwachungsbereich eines Sicherheitssensors befindet, ob eine vorgegebene Geschwindigkeit der Maschine oder eines Teils von ihr nicht überschritten wird oder Mindestabstände zu Objekten in der Umgebung eingehalten werden.

Ergibt die Überprüfung 60 des geplanten Bewegungsablaufs, dass dieser wenigstens einen nicht sicheren Bewegungsabschnitt aufweist, kann in einem Ausgabeschritt 62 die Ausgabe einer Information über den nicht sicheren Bewegungsabschnitt erfolgen. Entsprechen alle Bewegungsabschnitte den vorgegebenen Sicherheitskriterien, kann in einem Übermittlungsschritt 64 der geplante Bewegungsablauf an eine Steuereinheit der Maschine übermittelt werden.

Erfindungsgemäß wird ein geplanter Bewegungsablauf auch dann an die Steuereinheit der Maschine übermittelt, wenn er nicht sichere Bewegungsabschnitte aufweist, wobei der geplante Bewegungsablauf mit einer Information über den nicht sicheren Bewegungsabschnitt übermittelt wird, so dass die Maschine beim Ausführen des geplanten Bewegungsablaufs vor Erreichen des nicht sicheren Bewegungsabschnitts verlangsamt oder gestoppt wird.

## Patentansprüche

1. Vorrichtung (10, 30) zum Programmieren und/oder Betreiben einer beweglichen Maschine (12, 38), insbesondere eines Roboters, wobei die Vorrichtung (10, 30) dazu eingerichtet ist, Konfigurationsdaten der Maschine (12, 38), und Konfigurationsdaten wenigstens eines Sicherheitssensors (18, 18b, 34a, 34b), sowie einen eine Vielzahl von Bewegungsabschnitten (24a, 24b, 24c, 42a, 42b) aufweisenden, geplanten Bewegungsablauf (22, 40) der Maschine (12, 38) zu empfangen und unter Verwendung der Konfigurationsdaten der Maschine (12, 38) und der Konfigurationsdaten des wenigstens einen Sicherheitssensors (18a, 18b, 34a, 34b) wenigstens einen nicht sicheren Bewegungsabschnitt (24b, 42b) zu identifizieren, wobei der nicht sichere Bewegungsabschnitt (24b, 42b) wenigstens ein vorgegebenes Sicherheitskriterium verletzt, wobei die Konfigurationsdaten des Sicherheitssensors (18a, 18b, 34a, 34b) Dimensionen eines Überwachungsbereichs (20a, 20b, 36a, 36b) des Sicherheitssensors umfassen, wobei die Konfigurationsdaten der Maschine (10, 30) Dimensionen eines Arbeitsbereichs der Maschine umfassen, und wobei das vorgegebene Sicherheitskriterium eine Bewegung der Maschine (10, 30) innerhalb des Überwachungsbereichs (20a, 20b, 36a, 36b) des Sicherheitssensors (18a, 18b, 34a, 34b) ist,
**dadurch gekennzeichnet, dass** die Vorrichtung (10, 30) dazu eingerichtet ist,
den geplanten Bewegungsablauf (22, 40) auch dann an eine Steuereinheit (16) der Maschine (12, 38) zu übermitteln, wenn der geplante Bewegungsablauf (22, 40) nicht sichere Bewegungsabschnitte (24b, 42b) aufweist, wobei der geplante Bewegungsablauf (22, 40) mit einer Information über den nicht sicheren Bewegungsabschnitt (24b, 42b) übermittelt wird, so dass die Maschine (12, 38) bei Ausführung des Bewegungsablaufs vor Erreichen des nicht sicheren Bewegungsabschnitts (24b, 42b) verlangsamt oder gestoppt wird.

2. Vorrichtung nach Anspruch 1, **dadurch gekennzeichnet, dass** die Vorrichtung (10) Teil einer Steuereinheit (16) der Maschine (12) ist.

3. Vorrichtung nach Anspruch 1, **dadurch gekennzeichnet, dass** die Vorrichtung (10, 30) ein Ausgabegerät (26, 44, 46) zum Ausgeben einer Information über den nicht sicheren Bewegungsabschnitts (24b, 42b) aufweist.

4. Vorrichtung (10, 30) nach einem der vorhergehenden Ansprüche, **dadurch gekennzeichnet, dass** die Vorrichtung (10, 30) eine mehrere Speicherabschnitte umfassende Speichereinheit aufweist, wobei der geplante Bewegungsablauf (22, 40) in einem ersten Speicherabschnitt gespeichert ist, und die Konfigurationsdaten der Maschine (12, 38) und/oder die Konfigurationsdaten des wenigstens einen Sicherheitssensors (18a, 18b, 34a, 34b) in einem von dem ersten Speicherabschnitt verschiedenen, zweiten Speicherabschnitt gespeichert sind.

5. Verfahren (50) zum Programmieren und/oder Betreiben einer beweglichen Maschine (12, 38), insbesondere eines Roboters, umfassend die Schritte:
- Empfangen (52) von Konfigurationsdaten der Maschine (12, 38), und Konfigurationsdaten wenigstens eines Sicherheitssensors (18a, 18b, 34a, 34b), wobei die Konfigurationsdaten der Maschine (12, 38) Dimensionen eines Arbeitsbereichs der Maschine (12, 38) umfassen und die Konfigurationsdaten des Sicherheitssensors (18a, 18b, 34a, 34b) Dimensionen eines Überwachungsbereichs (20a, 20b, 36a, 36b) des Sicherheitssensors (18a, 18b, 34a, 34b) umfassen;
- Empfangen (54) wenigstens eines vorgegebenes Sicherheitskriteriums, wobei das vorgegebene Sicherheitskriterium eine Bewegung der Maschine (12, 38) innerhalb des Überwachungsbereichs (20a, 20b, 36a, 36b) des Sicherheitssensors (18a, 18b, 34a, 34b) ist;
- Empfangen (56) eines geplanten Bewegungsablaufs (22, 40) der Maschine, wobei der Bewegungsablauf eine Vielzahl von Bewegungsabschnitten aufweist;
- Identifizieren (58) von wenigstens einem nicht sicheren Bewegungsabschnitt (24b, 42b) unter Verwendung der Konfigurationsdaten der Maschine (12, 38) und der Konfigurationsdaten des wenigstens einen Sicherheitssensors (18a, 18b, 34a, 34b), wobei der nicht sichere Bewegungsabschnitt (24b, 42b) das wenigstens eine vorgegebene Sicherheitskriterium verletzt,
**gekennzeichnet durch** den weiteren Schritt:
- Übermitteln des geplanten Bewegungsablauf (22, 40) an eine Steuereinheit (16) der Maschine (12, 38), wobei der geplante Bewegungsablauf (22, 40) auch dann an die Steuereinheit der Maschine (12, 38) übermittelt wird, wenn er nicht sichere Bewegungsabschnitte (24b, 42b) aufweist, wobei der geplante Bewegungsablauf (22, 40) mit einer Information über den nicht sicheren Bewegungsabschnitt (24b, 42b) übermittelt wird, so dass die Maschine (12, 38) bei Ausführung des Bewegungsablaufs vor Erreichen des nicht sicheren Bewegungsabschnitts (24b, 42b) verlangsamt oder gestoppt wird.

6. Verfahren nach Anspruch 5, wobei die Identifizierung des nicht sicheren Bewegungsabschnitts während der Programmierung des Bewegungsablaufs erfolgt.

7. Verfahren nach Anspruch 5 oder 6, wobei eine Ausgabe des nicht sicheren Bewegungsabschnitts auf einem Ausgabegerät erfolgt.

8. Verfahren nach Anspruch 7, wobei der geplante Bewegungsablauf dargestellt und nicht sichere Bewegungsabschnitte hervorgehoben werden.

9. Computerprogramm mit Programmcodemitteln zum Durchführen eines Verfahrens nach Anspruch 5 bis 8.

10. Computerprogrammprodukt mit einem Speichermedium auf dem ein Computerprogramm nach Anspruch 9 gespeichert ist.

## Claims

1. Device (10, 30) for programming and/or operating a moving machine (12, 38), in particular a robot, the device (10, 30) being configured to receive configuration data of the machine (12, 38) and configuration data of at least one safety sensor (18, 18b, 34a, 34b) as well as a planned movement sequence (22, 40) of the machine (12, 38) having a plurality of movement sections (24a, 24b, 24c, 42a, 42b), and, using the configuration data of the machine (12, 38) and the configuration data of the at least one safety sensor (18a, 18b, 34a, 34b), to identify at least one unsafe movement section (24b, 42b), the unsafe movement section (24b, 42b) violating at least one predetermined safety criterion, wherein the configuration data of the safety sensor (18a, 18b, 34a, 34b) comprise dimensions of a monitoring range (20a, 20b, 36a, 36b) of the safety sensor (18a, 18b, 34a, 34b), wherein the configuration data of the machine (10, 30) comprise dimensions of a working range of the machine, and wherein the predetermined safety criterion is a movement of the machine (10, 30) within the monitoring range (20a, 20b, 36a, 36b) of the safety sensor (18a, 18b, 34a, 34b),
**characterized in that** the device (10, 30) is configured to transmit the planned movement sequence (22, 40) to a control unit (16) of the machine (12, 38) even if the planned movement sequence (22, 40) has non-safe movement sections (24b, 42b), the planned movement sequence (22, 40) being transmitted with information about the non-safe movement section (24b, 42b), so that the machine (12, 38) is slowed down or stopped when the movement sequence is executed before the non-safe movement section (24b, 42b) is reached.

2. Device according to claim 1, **characterized in that** the device (10) is part of a control unit (16) of the machine (12).

3. The device according to claim 1, **characterized in that** the device (10, 30) comprises an output device (26, 44, 46) for outputting information about the non-secure movement section (24b, 42b).

4. Device (10, 30) according to one of the preceding claims, **characterized in that** the device (10, 30) has a memory unit comprising a plurality of memory sections, the planned movement sequence (22, 40) being stored in a first memory section, and the configuration data of the machine (12, 38) and/or the configuration data of the at least one safety sensor (18a, 18b, 34a, 34b) being stored in a second memory section which is different from the first memory section.

5. Method (50) for programming and/or operating a moving machine (12, 38), in particular a robot, comprising the steps of
- receiving (52) configuration data of the machine (12, 38) and configuration data of at least one safety sensor (18a, 18b, 34a, 34b), the configuration data of the machine (12, 38) comprising dimensions of an operating range of the machine (12, 38) and the configuration data of the safety sensor (18a, 18b, 34a, 34b) comprising dimensions of a monitoring range (20a, 20b, 36a, 36b) of the safety sensor (18a, 18b, 34a, 34b);
- receiving (54) at least one predetermined safety criterion, wherein the predetermined safety criterion is a movement of the machine (12, 38) within the monitoring range (20a, 20b, 36a, 36b) of the safety sensor (18a, 18b, 34a, 34b);
- receiving (56) a planned movement sequence (22, 40) of the machine, wherein the movement sequence comprises a plurality of movement sections;
- identifying (58) at least one unsafe movement section (24b, 42b) using the configuration data of the machine (12, 38) and the configuration data of the at least one safety sensor (18a, 18b, 34a, 34b), wherein the unsafe movement section (24b, 42b) violates the at least one predetermined safety criterion,
**characterized by** the further step:
- transmitting the planned movement sequence (22, 40) to a control unit (16) of the machine (12, 38), the planned movement sequence (22, 40) being transmitted to the control unit of the machine (12, 38) even if it has non-safe movement sections (24b, 42b), wherein the planned movement sequence (22, 40) is provided with information about the non-safe movement section (24b, 42b), so that the machine (12, 38) is slowed down or stopped when the movement sequence is executed before the non-safe movement section (24b, 42b) is reached.

6. The method according to claim 5, wherein the identification of the unsafe movement section takes place during the programming of the movement sequence.

7. Method according to claim 5 or 6, wherein an output of the non-secure movement section is made on an output device.

8. The method according to claim 7, wherein the planned movement sequence is shown and unsafe movement sections are highlighted.

9. A computer program comprising program code means for carrying out a method according to claims 5 to 8.

10. A computer program product comprising a storage medium on which a computer program according to claim 9 is stored.

## Revendications

1. Dispositif (10, 30) de programmation et/ou d'exploitation d'une machine mobile (12, 38), en particulier un robot, dans lequel le dispositif (10, 30) est conçu pour recevoir des données de configuration de la machine (12, 38) et des données de configuration d'au moins un capteur de sécurité (18, 18b, 34a, 34b), ainsi qu'un déroulement de mouvement (22, 40) planifié de la machine (12, 38) présentant une pluralité de sections de mouvement (24a, 24b, 24c, 42a, 42b), et d'identifier au moins une section de mouvement non sûre (24b, 42b) en utilisant les données de configuration de la machine (12, 38) et les données de configuration du au moins un capteur de sécurité (18a, 18b, 34a, 34b), dans lequel la section de mouvement non sûre (24b, 42b) viole au moins un critère de sécurité prédéterminé, dans lequel les données de configuration du capteur de sécurité (18a, 18b, 34a, 34b) comprennent des dimensions d'une zone de surveillance (20a, 20b, 36a, 36b) du capteur de sécurité, dans lequel les données de configuration de la machine (10, 30) comprennent des dimensions d'une zone de travail de la machine, et dans lequel le critère de sécurité prédéterminé est un mouvement de la machine (10, 30) à l'intérieur de la zone de surveillance (20a, 20b, 36a, 36b) du capteur de sécurité (18a, 18b, 34a, 34b),
**caractérisé en ce que**
le dispositif (10, 30) est conçu pour transmettre le déroulement de mouvement planifié (22, 40) à une unité de commande (16) de la machine (12, 38) même si le déroulement de mouvement planifié (22, 40) présente des sections de mouvement non sûres (24b, 42b), dans lequel le déroulement de mouvement planifié (22, 40) est transmis avec une information sur la section de mouvement non sûre (24b, 42b), de sorte que la machine (12, 38) est ralentie ou arrêtée lors de l'exécution du déroulement de mouvement avant d'atteindre la section de mouvement non sûre (24b, 42b).

2. Dispositif selon la revendication 1, **caractérisé en ce que** le dispositif (10) fait partie d'une unité de commande (16) de la machine (12).

3. Dispositif selon la revendication 1, **caractérisé en ce que** le dispositif (10, 30) comprend un dispositif de sortie (26, 44, 46) pour émettre une information sur la section de mouvement non sûre (24b, 42b).

4. Dispositif (10, 30) selon l'une des revendications précédentes, **caractérisé en ce que** le dispositif (10, 30) comprend une unité de mémoire comprenant plusieurs sections de mémoire, dans lequel le déroulement de mouvement planifié (22, 40) est enregistré dans une première section de mémoire, et les données de configuration de la machine (12, 38) et/ou les données de configuration d'au moins un capteur de sécurité (18a, 18b, 34a, 34b) sont enregistrées dans une deuxième section de mémoire différente de la première section de mémoire.

5. Procédé (50) de programmation et/ou d'exploitation d'une machine mobile (12, 38), en particulier un robot, comprenant les étapes suivantes:
- recevoir (52) des données de configuration de la machine (12, 38), et de données de configuration d'au moins un capteur de sécurité (18a, 18b, 34a, 34b), dans lequel les données de configuration de la machine (12, 38) comprennent des dimensions d'une zone de travail de la machine (12, 38) et les données de configuration du capteur de sécurité (18a, 18b, 34a, 34b) comprennent des dimensions d'une zone de surveillance (20a, 20b, 36a, 36b) du capteur de sécurité (18a, 18b, 34a, 34b);
- recevoir (54) au moins un critère de sécurité prédéterminé, dans lequel le critère de sécurité prédéterminé est un mouvement de la machine (12, 38) à l'intérieur de la zone de surveillance (20a, 20b, 36a, 36b) du capteur de sécurité (18a, 18b, 34a, 34b);
- recevoir (56) une séquence de mouvement planifiée (22, 40) de la machine, dans lequel la séquence de mouvement comprend une pluralité de sections de mouvement ;
- identifier (58) au moins une section de mouvement non sûre (24b, 42b) en utilisant les données de configuration de la machine (12, 38) et les données de configuration d'au moins un capteur de sécurité (18a, 18b, 34a, 34b), dans lequel la section de mouvement non sûre (24b, 42b) viole l'au moins un critère de sécurité prédéterminé,
**caractérisé par** l'étape supplémentaire:
- transmettre le déroulement de mouvement planifié (22, 40) à une unité de commande (16) de la machine (12, 38), dans lequel le déroulement de mouvement planifié (22, 40) est transmis à l'unité de commande de la machine (12, 38) même s'il présente des sections de mouvement non sûres (24b, 42b), dans lequel déroulement de mouvement planifié (22, 40) est transmis avec une information sur la section de mouvement non sûre (24b, 42b), de sorte que la machine (12, 38) est ralentie ou arrêtée lors de l'exécution du déroulement de mouvement avant d'atteindre la section de mouvement non sûre (24b, 42b).

6. Procédé selon la revendication 5, dans lequel l'identification de la section de mouvement non sûre est effectuée pendant la programmation du déroulement de mouvement.

7. Procédé selon la revendication 5 ou 6, dans lequel une sortie de la section de mouvement non sûre est effectuée sur un dispositif de sortie.

8. Procédé selon la revendication 7, dans lequel le déroulement de mouvement planifié est représenté et les sections de mouvement non sûres sont mises en évidence.

9. Programme d'ordinateur comprenant des moyens de code de programme pour exécuter un procédé selon les revendications 5 à 8.

10. Produit de programme d'ordinateur comprenant un support de stockage sur lequel est stocké un programme d'ordinateur selon la revendication 9.
